# EUROPÄISCHE PATENTSCHRIFT

(11) **EP 1 147 062 B1**
(45) Veröffentlichungstag und Bekanntmachung des Hinweises auf die Patenterteilung: **09.04.2003**
(21) Anmeldenummer: 99965507.9
(22) Anmeldetag: 21.12.1999
(51) Int. Cl.: C02F 1/52

(54) **VERFAHREN UND ANLAGE ZUR SANIERUNG VON OBERFLÄCHENGEWÄSSERN**
METHOD AND INSTALLATION FOR SANITIZING SURFACE WATER
PROCEDE ET INSTALLATION POUR L'ASSAINISSEMENT D'EAUX DE SURFACE

(30) Priorität: 22.12.1998 DE 19860568
(43) Veröffentlichungstag der Anmeldung: 24.10.2001
(73) Patentinhaber: Menschel, Claudia, 01187 Dresden (DE); Panning, Frank, 15366 Dahlwitz-Hoppegarten (DE); Prause, Christian, 04924 Bad Liebenwerda (DE); Ulbrich, Götz, 15848 Gross-Rietz bei Beeskov (DE)
(72) Erfinder: Menschel, Claudia, 01187 Dresden (DE); Panning, Frank, 15366 Dahlwitz-Hoppegarten (DE); Prause, Christian, 04924 Bad Liebenwerda (DE); Ulbrich, Götz, 15848 Gross-Rietz bei Beeskov (DE)
(74) Vertreter: Hengelhaupt, Jürgen D., Dipl.-Ing.
(86) Internationale Anmeldenummer: EP9910161
(87) Internationale Veröffentlichungsnummer: WO00037366

(56) Entgegenhaltungen:
- EP-A- 0 480 055
- DE-A- 4 216 096
- US-A- 4 507 206
- US-A- 5 089 120
- US-A- 5 185 085
- US-A- 5 330 639
- US-A- 5 702 614
- PATENT ABSTRACTS OF JAPAN vol. 011, no. 282 (C-446), 11. September 1987 (1987-09-11) & JP 62 083011 A (AGENCY OF IND SCIENCE & TECHNOL), 16. April 1987 (1987-04-16)

## Beschreibung

Die Erfindung betrifft ein Verfahren und eine Anlage zur Sanierung von Oberflächengewässern gemäß dem Oberbegriff der Ansprüche 1 und 8.

Durch das dosierte Einarbeiten eines oder mehrerer flüssiger und/oder pulverförmiger Zuschlagstoffe in das Gewässer sollen Sanierungseffekte erreicht werden, die eine verbesserte Wasserqualität bewirken.

Die bekannten Technologien und Vorrichtungen zur Gewässersanierung sehen das Ausbaggern von Sedimenten mittels Saugspülbagger, die Tiefenwasserableitung über Pumpen, die Tiefenwasserbelüftung, die Sedimentabdeckung, die Aktivierung des Sedimentabbaus durch Einbringen von Katalysatoren, chemische oder biologische Konditionierung der Sedimente, die Flockung mit Zusatz von einem einzelnen Flockungsmittel, Zwangszirkulation oder auch biologische Verfahren wie die Biomanipulation vor.

Bei der Sanierung von Kleinst-Teichen ist es aus der US 5,500,131 auch bekannt, Flockungsverfahren einzusetzen, bei denen zwei Komponenten wie Kalk und Aluminiumchlorid nacheinander eingebracht werden, Flocken bilden und dabei Algen und Nährstoffe binden. Zunächst wird manuell eine dem zu behandelnden Wasservolumen entsprechend dosierte Menge des pulverförmigen Zuschlagstoffes mit einer vorge-schriebenen Menge Wasser suspendiert, anschließend gleichmäßig auf der Wasseroberfläche verteilt und in den Wasserkörper eingearbeitet. Eine ebenfalls dosierte und verdünnte Menge des flüssigen Zuschlagstoffes wird nach einer vorgegebenen Zeit in das vorbehandelte Wasser eingemischt. Dieses Verfahren ist auf Kleinst-gewässer von wenigen Quadratmetern Oberfläche und wenigen Kubikmetern Inhalt beschränkt. Die Vorbereitung und Einarbeitung der Komponenten in den Gewässerkörper erfolgt manuell.

Es sind Verfahren und Vorrichtungen zum Eindosieren von Flockungsmitteln in Reaktionsgefäße (DE 38 26 794 A1) sowie Verfahren zum Klären von Abwasser durch Kalk- und Flockungsmittelzugaben (DE 39 13 044 A1) und Vorrichtungen zum Einbringen von flüssigen, festen, gasförmigen Stoffen in Wasser mittels Düsensystemen und Propellerrührwerken (DE-OS 27 24 533, DE-OS 28 44 113) bekannt geworden. Es sind jedoch keine Technologien bekannt, die geeignet sind, größere Gewässer mit einer mehrere Hektar großen Oberfläche effektiv zu behandeln.

Das Problem der Sanierung von größeren Gewässern durch Flockung besteht darin, in der Freiwasserzone überhaupt einen Flockungsprozeß zu initiieren, bei dem ausreichend große, absetzbare Flocken entstehen, die Nährstoffe und suspendierte Bestandteile binden können. Ein weiteres Problem besteht darin, daß die Flocken in dem gesamten Wasserkörper gleichmäßig zu verteilen sind, um den Sanierungseffekt zu erreichen. Hinzu kommt, daß die üblichen Flockungsmittel vor allem bei Überdosierungen zu vorübergehenden Beeinträchtigungen der Lebensbedingungen im Gewässer führen können.

Diese Probleme können durch den bekannten Stand der Technik nicht gelöst werden. Speziell die gleichmäßige Verteilung der Flocken kann nicht gewährleistet werden. So werden zum Beispiel bei der Anwendung von Propellern in flachen Gewässern Sedimente vom Boden hochgezogen und verteilt. Das kann zu einer zusätzlichen Belastung des Gewässerkörpers führen. Eine Zweikomponentenflockung im Freiwasser von größeren Gewässern ist mit den bekannten Einrichtungen und Mitteln nicht realisierbar.

Der Erfindung liegt die Aufgabe zugrunde, ein gattungsgemäßes Verfahren und eine Anlage zu entwickeln, mit denen die Mängel der bekannten Einrichtungen vermieden werden und mit denen eine preiswerte, schnelle und ökologisch zuverlässige Sanierung von Gewässern bis zur mittleren Größe durch das Einbringen von Zuschlagstoffen gewährleistet wird.

Erfindungsgemäß wird diese Aufgabe durch die Merkmale der Ansprüche 1 und 8 gelöst. Dadurch, daß eine erste vorsuspendierte Komponente mit einer Dosierpumpe einer Mischeinrichtung zugeführt und dort einem Frischwasserstrom beigegeben wird, mit dem eine gleichmäßige Vermischung und definierte Verdünnung erfolgt, die verdünnte Komponente einer Verteileinrichtung zugeführt und mit definiertem Volumenstrom auf eine mindestens teilweise ins Wasser eingetauchte Einmischeinrichtung gegeben wird, eine weitere Komponente mit einer weiteren Dosierpumpe einem weiteren Frischwasserstrom zugeführt und gleichmäßig vermischt und definiert verdünnt einer weiteren Verteileinrichtung sowie einer nachgeordneten Einmischeinrichtung zugeführt wird, wobei der notwendige Zeitabstand zwischen den Einbringungen der Komponenten in das Gewässer manuell oder automatisch in Abhängigkeit von den aktuellen Gegebenheiten wie Fließgeschwindigkeit des Wassers, Reaktionszeit der Komponenten eingestellt wird, kann gewährleistet werden, daß auch größere Gewässer abschnittsweise behandelt werden.

Die Anlage nach der Erfindung gewährleistet durch ihre komplexe und flexible Gestaltung eine effektive und zuverlässige Sanierung von Gewässern unterschiedlicher Größe mit vertretbarem Aufwand. Die eingesetzten rotierenden Bürstenwalzen mit auswechselbaren, in Beborstung und Durchmesser variierbaren Bürstenelementen ermöglichen eine rationelle Einmischung der Komponenten, Ausbildung von Flocken im Freiwasserraum und eine Anpassung an die Gewässerverhältnisse durch eine Veränderung der Eintauchtiefe, der Drehzahl und Drehrichtung der Bürsten.

Sowohl das Verfahren als auch die Anlage können auf stationäre Weise oder auf schwimmenden Geräteträgern angewendet werden. Es sind auch Mischformen in der Art realisierbar, daß einige Baugruppen/Verfahrenselemente stationär und andere schwimmend verwendet werden.

Vorteilhafte Weiterbildungen der Erfindung ergeben sich aus den Unteransprüchen.

Die Erfindung soll nachstehend anhand einer Zeichnung an einem Ausführungsbeispiel einer Anlage zur Sanierung von Gewässern näher erläutert werden. Es zeigen:
- Fig. 1: eine schematische Darstellung der Funktionseinheiten der Anlage und
- Fig. 2: eine schematische Darstellung der Logistik.

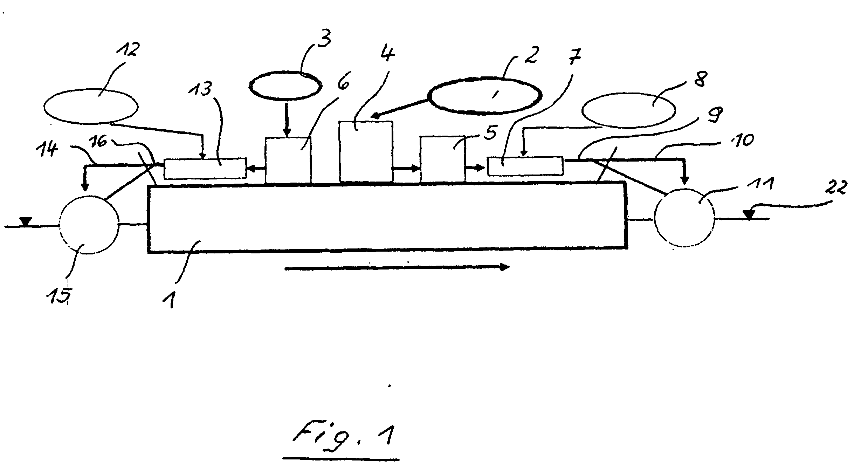

Die Anlage nach der Fig. 1 ist konzipiert für die volumenbezogene, dosierte gleichmäßige Einarbeitung eines kombinierten Flockungsmittels, bestehend aus einem flüssigen und einem pulverförmigen Zuschlagstoff, in ein mehrere Hektar großes Gewässer mit dem Ziel, durch die eintretenden Flockungseffekte die Gewässer-qualität deutlich zu verbessern. So kann zum Beispiel durch die volumendosierte Einbringung von Coccolithenkalk und von Polyaluminiumhydroxychlorid in definierter zeitlicher Abfolge eine Bildung von Flocken zwischen den beiden eingebrachten Komponenten erzielt werden, an denen eine Adsorption von Phosphat, Spurenelementen und Algen stattfindet und nachfolgend eine Sedimentation und Mineralisation erreicht wird.

Die Fig. 1 zeigt das technische Schema der Anlage zur Sanierung von Gewässern aufgebaut auf einen Ponton 1 als schwimmendem Geräteträger.

Auf dem Ponton 1 sind Vorratsbehälter 2, 3 für die Zuschlagstoffe Kalk als pulverförmige Komponente und Aluminiumchlorid als flüssige Komponente vorgesehen. Die pulverförmige Komponente wird aus dem Vorratsbehälter 2 in ein Rührwerk mit Behälter 4 geführt und dort in eine Suspension (Vorsuspendie-rung/Hydrolisierung) überführt und bis zur Verarbeitung in diesem Zustand gehalten. Mit dem Rührwerk 4 ist eine Dosierpumpe 5 verbunden, mit der eine definierte Menge der Suspension in einen nachgeschalteten Statikmischer 7 geführt wird.

Im Statikmischer 7 erfolgt die gleichmäßige Vermischung und Verdünnung der Suspension durch Frischwasserzugabe 8 bis zur gewünschten Konzentration. Der so verdünnte Zuschlagstoff gelangt über eine Rohr- oder Schlauchleitung 9 zu einer Verteileinrichtung 10 an der in Fahrtrichtung (Pfeil) Vorderseite des Pontons 1. Die Verteileinrichtung 10 ist als horizontales Rohr mit einer bestimmten Anzahl Düsen eines bestimmten Durchmessers ausgebildet. Die Suspension gelangt über die nicht dargestellten Düsen auf eine ganz oder teilweise ins Wasser eingetauchte (Gewässeroberfläche 11) Einmischeinrichtung 11. Die Einmischeinrichtung ist durch eine rotierende Bürstenwalze gebildet, welche auswechselbare, in Beborstung und Durchmesser variierbare Bürstenelemente aufweist. Die Eintauchtiefe, die Drehzahl und die Drehrichtung der Bürsten sind variabel und können an verschiedene Gewässerverhältnisse und Behandlungsver-fahren . angepaßt werden. Die Einmischeinrichtung kann auch teilweise eine Walze mit einer Paddelbestückung oder dgl. sein.

Die Einmischeinrichtung kann auch durch einen auftriebsregulierten Tauchkörper gebildet sein. Die Einmischung erfolgt in definierter Höhe über dem und/oder direkt in das Gewässersediment.

Die in flüssiger Form vorliegende Komponente wird aus dem Vorratsbehälter 3 mit einer Dosierpumpe 6 mit einem zweiten Frischwasserstrom 12 einem Statikmischer 13 zugeführt und dort gleichmäßig vermischt und auf das gewünschte Maß verdünnt. Die verdünnte Komponente wird über Rohr- oder Schlauchleitungen 16 einer zweiten Einmischeinrichtung 15, bestehnd aus Bürstenwalzen, auf der Heckseite des Pontons 1 zugeführt.

Die Dosierpumpen 5,6 sind vorzugsweise Membranpumpen mit einstellbarem Volumenstrom. Der einzustellende Volumenstrom leitet sich aus der aktuellen Wassertiefe, der Beschaffenheit der Zuschlagstoffe, der Breite der Verteileinrichtungen 10, 14 sowie der momentanen Fahrgeschwindigkeit, zum Beispiel zwischen 10...20 m/min, ab. Die Einstellung kann manuell oder automatisch erfolgen. Der erforderliche Zeitabstand zwischen den Einbringungen der Zuschlagstoffe wird anhand des Abstandes beider Einbringstellen über die Vortriebsgeschwindigkeit eingestellt.

Nicht dargestellt sind die mit den aufgeführten Baugruppen verbundenen Schalt- und Steuereinheiten zur Versorgung und Überwachung und zur Steuerung der zeitlichen Abläufe sowie eine Antriebseinheit, welche den Vortrieb des Pontons 1 mit definierter Geschwindigkeit ermöglicht.

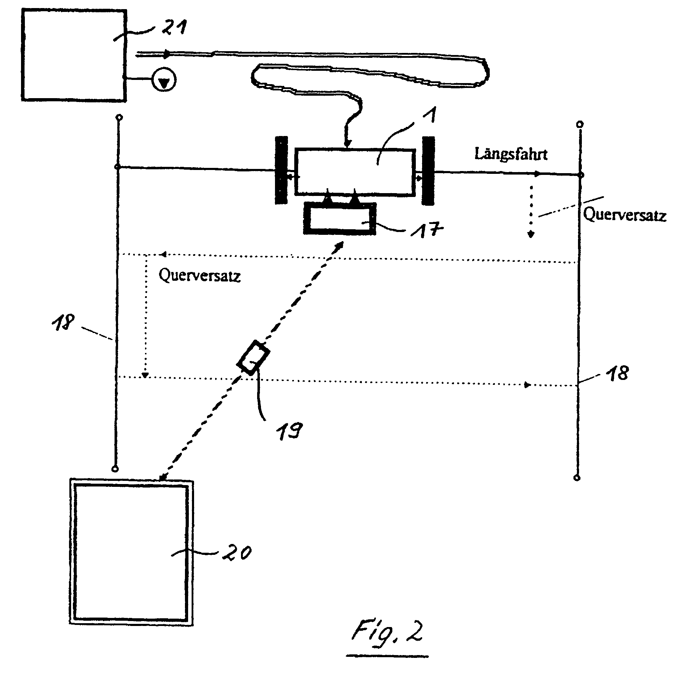

In der Fig. 2 ist das technische Schema der Logistik zur störungsfreien Realisierung der technologischen Abläufe dargestellt.

Die Anlage nach der Fig. 1 wird entsprechend der beispielhaften Darstellung in der Fig. 2 mit dem Ponton 1 abschnittsweise über das zu sanierende Gewässer bewegt, hier an Querseilen 18 geführt. Der Ponton 1 wird nach der Absolvierung einer Längsfahrt in Querrichtung so versetzt, daß eine flächendeckende Ausbringung der Zuschlagstoffe in das Gewässer gewährleistet ist. Auf einem an den Ponton 1 angelegten Beiboot 17 werden mittels eines Zubringerbootes 19 kontinuierlich aus einem Lager 20 die verwendeten Zuschlagstoffe nachgefüllt, so daß eine kontinuierliche Arbeit gesichert ist. Wasserund Energiezufuhr erfolgen aus einem Depot 21 über entsprechende Leitungen.

Es können auch einige oder alle Baugruppen des Geräteträgers 1 in ein Fließgewässer wie Zufluß/Wasser-lauf zu einem Gewässer fest eingebaut sein, so daß die Einarbeitung der Komponenten in den Wasserstrom erfolgt.

Bei schwer zugänglichen Gewässern ist auch die Anlegung von Bypass-Wasserläufen mit darin installierten Baugruppen der Anlage nach der Erfindung bzw. von Verfahrenselementen vorstellbar.

Die Erfindung ist nicht auf das hier beschriebene Ausführungsbeispiel beschränkt. Vielmehr ist es möglich, durch Kombination und Modifikation der beschriebenen Merkmale weitere Ausführungsvarianten zu realisieren, ohne den Rahmen der Erfindung zu verlassen.

### Bezugszeichenliste

- 1: Ponton
- 2: Vorratsbehälter
- 3: Vorratsbehälter
- 4: Rührwerk
- 5: Dosierpumpe
- 6: Dosierpumpe
- 7: Statikmischer
- 8: Frischwasser
- 9: Rohr- oder Schlauchleitung
- 10: Verteileinrichtung
- 11: Einmischeinrichtung
- 12: Frischwasser
- 13: Statikmischer
- 14: Verteileinrichtung
- 15: Einmischeinrichtung
- 16: Rohr- oder Schlauchleitung
- 17: Beiboot
- 18: Querseil
- 19: Zubringerboot
- 20: Lager
- 21: Depot
- 22: Gewässeroberfläche

## Patentansprüche

1. Verfahren zur Sanierung von Oberflächengewässern durch das Einbringen von den Sanierungseffekt bewirkenden Komponenten, wobei die Komponenten wasservolumenbezogen dosiert und mit definierter zeitlicher Verzögerung nacheinander in das Gewässer eingebracht und eingearbeitet werden,
**dadurch gekennzeichnet, daß**
- eine erste vorsuspendierte Komponente mittels einer Dosierpumpe (5) durch Einspritzung in eine Mischeinrichtung (7) einem Frischwasserstrom (8) beigegeben wird, mit dem eine gleichmäßige Vermischung und definierte Verdünnung erfolgt,
- die verdünnte Komponente einer Verteileinrichtung (10) zugeführt und mit definiertem Volumenstrom auf eine mindestens teilweise ins Wasser eingetauchte Einmischeinrichtung (11) gegeben wird,
- eine weitere Komponente mit einer weiteren Dosierpumpe (6) durch Einspritzen in eine Mischeinrichtung (13) einem weiteren Frischwasserstrom (12) zugeführt und gleichmäßig vermischt und definiert verdünnt einer weiteren Verteileinrichtung (14) sowie einer nachgeordneten, mindestens teilweise ins Wasser eingetauchten Einmischeinrichtung (15) zugeführt wird,
wobei der notwendige Zeitabstand zwischen den Einbringungen der Komponenten in das Gewässer manuell oder automatisch in Abhängigkeit von den aktuellen Gegebenheiten wie Fließgeschwindigkeit des Wassers, Reaktionszeit der Komponenten eingestellt wird.

2. Verfahren nach Anspruch 1, **dadurch gekennzeichnet, daß** die erste Komponente vor der Dosierung mit vorzugsweise aus dem Gewässer entnommenen Wasser in einem definierten Mischungsverhältnis suspendiert wird und die Suspension bis zu ihrer Verarbeitung am Absetzen gehindert wird.

3. Verfahren nach Anspruch 1, **dadurch gekennzeichnet, daß** die Einmischung der Komponenten in das Wasser mittels rotierender Walzen mit Verteilelementen wie Bürsten, Stäben, Paddeln vorgenommen wird.

4. Verfahren nach Anspruch 1, **dadurch gekennzeichnet, daß** die Einmischung der Komponenten mittels eines auftriebsregulierten Tauchkörpers in definierter Höhe über dem und/oder direkt in das Gewässersedi ment vorgenommen wird.

5. Verfahren nach den Ansprüchen 1 bis 4, **dadurch gekennzeichnet, daß** Verfahrenselemente wie Dosierpumpen (5,6), Verteileinrichtungen (10,14), Einmischeinrichtungen (11,15) auf einem schwimmenden Geräteträger (1) angeordnet werden, der mit einer definierten, regelbaren Geschwindigkeit auf einer definierten Strecke abschnittsweise über das Gewässer bewegt wird, wobei die Einarbeitung der Komponenten in Fahrtrichtung hintereinander vorgenommen wird.

6. Verfahren nach Anspruch 5, **dadurch gekennzeichnet, daß** die Verfahrenselemente in einem Wasserstrom wie Zufluß, Wasserlauf fest installiert werden und die Einarbeitung der Komponenten in den Wasserstrom erfolgt.

7. Verfahren nach Anspruch 5, **dadurch gekennzeichnet, daß** die vorsuspendierte Komponente in Fahrtrichtung vorne in das Gewässer eingebracht wird und der notwendige Zeitabstand der Einbringung der weiteren Komponente am Heck des Geräteträgers (1) anhand des Abstandes beider Einbringstellen (11,14) und der Vortriebsgeschwindigkeit des Geräteträgers (1) eingestellt wird.

8. Anlage zur Sanierung von Oberflächengewässern, zur Einbringung von den Sanierungseffekt bewirkenden Komponenten,
**dadurch gekennzeichnet, daß**
auf einem Geräteträger (1)
- mindestens zwei Vorratsbehälter (2,3) für die erste und weitere Komponenten,
- mindestens ein Rührwerk zur Suspendierung pulverförmiger Komponenten,
- Dosierpumpen (5,6) wie Membranpumpen mit einstellbarem Volumenstrom für jede der Komponenten,
- Mischvorrichtungen (7,13) zur Einbringung der Komponenten in je einen definierten Frischwasserstrom (8,12) und zur anschließenden intensiven Vermischung,
- jeweils eine Vorrichtung (10,14) zur gleichmäßig verteilten Ausbringung der Komponenten auf die Gewässeroberfläche über eine definierte Breite,
- je eine den Verteil- und Ausbringeinrichtungen (10,14) zugeordnete Einmischeinrichtung (11,15) zur intensiven Einarbeitung der Komponenten in die obere Schicht des Wassers,
- Schalt- und Steuereinrichtungen zur Versorgung, Überwachung der Aggregate und zur Steuerung der zeitlichen Abläufe,
zu einer funktionellen Einheit miteinander verbunden sind.

9. Anlage nach Anspruch 8, **dadurch gekennzeichnet, daß** die Verteileinrichtungen (10,14) als horizontale, quer zur Längsachse des Geräteträgers (1) angeordnete Rohre mit einer definierten Anzahl von Düsen eines bestimmten Durchmessers ausgebildet sind, wobei die Form und die Anzahl der Düsen in Abhängigkeit von der Komponente und dem mittleren zu bewältigenden Volumenstrom ausgebildet sind.

10. Anlage nach den Ansprüchen 8 und 9, **dadurch gekennzeichnet, daß** die Einmischeinrichtung (11,15) aus einer rotierenden Bürstenwalze mit auswechselbaren, in Beborstung und Durchmesser variierbaren Borstenelementen besteht, wobei die Eintauchtiefe, Drehzahl und Drehrichtung der Bürsten variabel und den Gewässerverhältnissen und Sanierungsverfahren anpaßbar sind.

11. Anlage nach den Ansprüchen 8 und 9, **dadurch gekennzeichnet, daß** die Einmischeinrichtung (11, 15) aus einer mit verschieden ausgebildeten Aufsätzen versehenen oder aus Stäben gebildeten Walze besteht, wobei die Eintauchtiefe, Drehzahl und Drehrichtung der Aufsätze bzw. der Stäbe variabel und den Gewässerverhältnissen und Sanierungsverfahren anpaßbar sind.

12. Anlage nach den Ansprüchen 8 bis 11, **dadurch gekennzeichnet, daß** die Anlage modular aufgebaut und an die Gewässergröße anpaßbar ist.

13. Anlage nach den Ansprüchen 8 bis 12, **dadurch gekennzeichnet, daß** Baugruppen des Geräteträgers (1) in ein Fließgewässer eingebaut sind und die Zeitdifferenz zwischen dem Einmischen der beiden Komponenten durch den Abstand der Einmischeinrichtungen (11,15) voneinander eingestellt ist.

14. Anlage nach den Ansprüchen 8 bis 12, **dadurch gekennzeichnet, daß** der Geräteträger (1) wie ein Ponton oder ein Katamaran schwimmfähig ausgeführt ist und eine regelbare Antriebseinheit zur Einstellung einer definierten Geschwindigkeit des Geräteträgers (1) aufweist.

15. Anlage nach den Ansprüchen 8 bis 12 und 14, **dadurch gekennzeichnet, daß** am Geräteträger (1) Leitwände zur Abgrenzung des Reaktionsraumes der eingebrachten Komponenten und zur Verhinderung der Abdrift der Komponenten im Wasser vorgesehen sind.

## Claims

1. Method for the rehabilitation of surface waters by means of the application of components producing the rehabilitation effect, where the components are dosed on a water-volume-related basis and are applied to and integrated in the waters, successively and with a defined timing delay,
**wherein**
- a first pre-suspended component is added to a fresh water current (8) with a dosage pump (5) by means of injection into a mixing facility (7), with which a uniform mixing and a defined thinning is effected,
- the thinned component is led to a distributing facility (10) and, with a defined volume flow, is added to a blending facility (11) which is at least partially immersed in the water,
- a further component with a further dosage pump (6) is led to a further fresh water current (12) by injection into a mixing facility (13) and then led, uniformly mixed and definedly thinned, to a further distributing facility (14) as well as to a subsequently arranged blending facility (15) which is at least partially immersed in the water,
where the necessary time-interval between the applications of the components into the water is set manually or automatically in dependence of the current-status conditions such as the flow velocity of the water, reaction time of the components.

2. Method according to Claim 1, **wherein** the first component, before dosage, is suspended with water preferentially taken from the waters in a defined mixing ratio, and the suspension is prevented from settling before it is processed.

3. Method according to Claim 1, **wherein** the blending of the components in the water is carried out by means of rotating shafts with distributing elements such as brushes, rods, paddles.

4. Method according to Claim 1, **wherein** the blending of the components is carried out by means of a buoyancy-regulated immersion body in a defined height above the waters sediment and/or directly into the waters sediment.

5. Method according to the Claims 1 to 4, **wherein** the method elements such as dosage pumps (5, 6), distributing facilities (10, 14), blending facilities (11, 15) are arranged on a floating equipment carrier (1), which is moved with a defined and controllable speed on a defined length and section-wise over the waters, where the integration of the components in the direction of travel is carried out in successive order.

6. Method according to Claim 5, **wherein** the method elements are solidly installed in a water current such as inflow, water course, and the integration of the components into the water current is effected.

7. Method according to Claim 5, **wherein** the pre-suspended components are applied out front into the waters in the direction of travel, and the necessary time interval of the application of the further components at the rear of the equipment carrier (1) is set, based on the spacing between both application locations (11, 14) and the forward speed of the equipment carrier (1).

8. A plant for the rehabilitation of surface waters, for the application of components producing the rehabilitation effect,
**wherein,**
on an equipment carrier (1),
- at least two storage vessels (2, 3) for the first and further components,
- at least one stirring mechanism for suspending powder-shaped components,
- dosage pumps (5, 6) such as membrane pumps with adjustable volume flow for each of the components,
- mixing devices (7, 13) for the application of the components into a defined fresh water current (8, 12) in each case and for the purpose of subsequent intensive mixing,
- in each case, a device (10, 14) for the evenly distributed output of the components onto the waters surface over a defined width,
- a blending facility (11, 15) allocated in each case to the distributing and output facilities (10, 14) for the purpose of intensive integration of the components into the upper layer of the water,
- switching and control units for the supply, monitoring of the aggregates and for the control of the timing sequences,
are connected up together to form a functional unit.

9. Plant according to Claim 8, **wherein** the distributing facilities (10, 14) are designed and executed as horizontal tubes transverse to the longitudinal axis of the equipment carrier (1), having a defined number of nozzles of a certain diameter, where the form and the number of nozzles are designed and executed in dependence of the components and the mean volume flow to be accomplished.

10. A plant according to Claims 8 and 9, **wherein** the blending facility (11, 15) consists of a rotating brush shaft with replaceable brush elements which are variable with regard to brush-configuration and diameter, where the immersion depth, speed and direction of rotation of the brushes are variable and adaptable to the waters conditions and the rehabilitation methods.

11. A plant according to Claims 8 and 9, **wherein** the blending facility (11, 15) consists of a shaft with various executed mounted assemblies or of rods, where the immersion depth, speed and direction of rotation of the assemblies and/or the rods are variable and adaptable to the waters conditions and the rehabilitation methods.

12. A plant according to the Claims 8 to 11, **wherein** the plant has a modular design arrangement and is adaptable to the waters size.

13. A plant according to the Claims 8 to 12, **wherein** assembly groups of the equipment carrier (1) are built into a flowing water and the timing difference between the blending of the two components is set from each other by means of the spacing of the blending facilities (11, 15).

14. A plant according to the Claims 8 to 12, **wherein** the equipment carrier is executed as a floatable pontoon or as a catamaran, and has a controllable drive unit for the adjustable setting of a defined speed of the equipment carrier (1).

15. A plant according to the Claims 8 to 12 and 14, **wherein** at the equipment carrier (1), guide walls are envisaged for the delimitation of the reaction area of the applied components and for preventing the drift-off of the components in the water.

## Revendications

1. Procédé pour assainir les eaux de surfaces par apport de composants provoquant l'effet d'assainissement, les composants étant dosés selon le volume de l'eau et introduits l'un après l'autre avec un décalage temporel défini, **caractérisé en ce que**:
- un composant, qui etait mis en pré-suspension, est introduit dans un flux d'eau fraîche (8) au moyen d'une pompe de dosage (5) par une injection dans un dispositif de mélange (7) avec lequel dispositif est réalisé un mélange régulier et une dilution définie,
- le composant dilué est conduit à un dispositif de distribution (10) et est fourni selon un flux de volume défini à un dispositif de mélange (11) plongé au moins en partie dans l'eau,
- un autre composant est introduit dans un autre flux d'eau fraîche (12) par injection dans un dispositif de mélange (13) avec une autre pompe de dosage (6) et ledit composant étant mélangé en même temps puis dilué selon définition et conduit à un autre dispositif de distribution (14) ainsi qu'un dispositif de mélange (15) en aval plongé au moins en partie dans l'eau; le laps de temps nécessaire entre l'apport de composants dans l'eau étant réglé manuellement ou automatiquement en fonction des situations actuelles telles que la vitesse de flux de l'eau et le temps de réaction des composants.

2. Procédé selon la revendication 1, **caractérisé en ce que** le premier composant est mis en suspension avant le dosage avec, de préférence, de l'eau prélevée des eau selon un volume de dosage défini et **en ce qu'**on empêche la suspension de se déposer jusqu'à son traitement.

3. Procédé selon la revendication 1, **caractérisé en ce que** le mélange des composants est réalisé dans l'eau au moyen de rouleaux rotatifs avec des éléments servant à la distribution comme des brosses, des tiges, des pagaies.

4. Procédé selon la revendication 1, **caractérisé en ce que** le mélange des composants est réalisé au moyen d'un corps - plongeur réglé par la poussée à une hauteur définie au dessus et/où directement dans le sédiment des eaux.

5. Procédé selon les revendications 1 à 4, **caractérisé en ce que** des éléments du procédé tels des pompes de dosage (5,6), des dispositifs de distribution (10,14), des dispositifs de mélange (11, 15) sont disposés sur un support d'appareil (1) flottant qui est déplacé à une vitesse définie et réglable sur une longueur définie par tronçon sur les eaux; l'introduction des composants l'un après l'autre étant réalisée dans la direction du trajet.

6. Procédé selon la revendication 5 **caractérisé en ce que** les éléments du procédé sont installés fixement dans un flux d'eau tel qu'une alimentation en eau ou un courant d'eau et l'introduction des composants se produit dans le flux d'eau.

7. Procédé selon la revendication 5, **caractérisé en ce que** les composants mis en pré-suspension sont introduits en direction du trajet à l'avant dans les eaux et réglés selon le laps de temps nécessaire pour l'introduction des autres composants sur l'arrière du support de l'appareil (1) à l'aide de la distance entre les deux endroits d'introduction (11, 14) et selon la vitesse d'avancement du support de l'appareil (1).

8. Installation pour assainir les eaux de surfaces et pour introduire les composants provoquant l'effet d'assainissement, **caractérisé en ce que**, sur le support de l'appareil (1), on trouve:
- au moins deux récipients de réserve (2,3) pour les premiers et les autres composants,
- au moins un malaxeur pour mettre en suspension des composants sous forme de poudre,
- des pompes de dosage (5,6) telles que des pompes à membranes avec un flux de volume réglable pour chacun des composants,
- des dispositifs de mélange (7,13) pour introduire les composants, chaque fois dans un flux d'eau fraîche défini (8,12) et pour un mélange intensif ultérieur,
- à chaque fois, un dispositif (10,14) pour étaler de manière régulière les composants sur les surfaces des eaux sur une largeur définie,
- à chaque fois, les dispositifs de mélange (11, 15) associés aux dispositifs de distribution et de répartition pour l'introduction intensive des composants dans la couche supérieure de l'eau,
- des dispositifs de commutation et de commande pour l'alimentation, la surveillance des unités et pour commander les déroulements temporels, lesquels sont reliés entre eux pour former une unité fonctionnelle.

9. Installation selon la revendication 8, **caractérisé en ce que** les dispositifs de distribution (10,14) sont réalisés comme des tubes disposés horizontalement et transversalement par rapport à l'axe longitudinal du support de l'appareil (1); lesquels tubes ont un nombre défini de buses d'un certain diamètre ; la forme et le nombre de buses étant réalisés en fonction des composants et du flux de volume moyen à maîtriser.

10. Installation selon les revendications 8 et 9, **caractérisée en ce que** le dispositif de mélange (11, 15) consiste en un rouleau-brosse rotatif avec des éléments de poil échangeables et variables en ce qui concerne le diamètre et l'équipement en poils; la profondeur de plongée, la vitesse de rotation et la direction de rotation des brosses s'adaptant de façon variable aux conditions des eaux et des procédés d'assainissement ;

11. Installation selon les revendications 8 et 9, **caractérisée en ce que** le dispositif de mélange (11, 15) consiste en un cylindre pourvu d'accessoires réalisés de manière différente ou formé de tiges; la profondeur de plongée, la vitesse de rotation et la direction de rotation des accessoires ou des tiges étant variables et adaptables aux conditions des eaux et des procédés d'assainissement.

12. Installation selon les revendications 8 à 11, **caractérisée en ce que**, l'installation est construite de façon modulable et s'adapte à la taille des eaux.

13. Installation selon les revendications 8 à 12, **caractérisée en ce que** des modules du support de l'appareil (1) sont installés dans des eaux courantes et **en ce que** le laps de temps entre le mélange des deux composants est réglé par la distance des dispositifs de mélange (11, 15) entre eux.

14. Installation selon la revendication 8 à 12, **caractérisée en ce que** le support de l'appareil (1) est réalisé comme un ponton ou un catamaran qui peuvent flotter et comporte une unité d'entraînement réglable pour régler une vitesse définie du support de l'appareil (1).

15. Installation selon les revendications 8 à 12 et 14, **caractérisée en ce que**, sur le support de l'appareil (1), on a prévu des parois de guidage pour délimiter l'espace de réaction des composants introduits et pour empêcher la dérive des composants dans l'eau.
